# EUROPEAN PATENT SPECIFICATION

(11) **EP 4 344 542 B1**
(45) Date of publication and mention of the grant of the patent: **09.07.2025**
(21) Application number: 23197437.9
(22) Date of filing: 14.09.2023
(51) Int. Cl.: A01N 1/146, A01N 1/143

(54) **DEVICE FOR THE STORAGE AND TRANSPORT OF BIOLOGICAL MATERIAL**
VORRICHTUNG ZUR LAGERUNG UND ZUM TRANSPORT VON BIOLOGISCHEM MATERIAL
DISPOSITIF DE STOCKAGE ET DE TRANSPORT DE MATIERE BIOLOGIQUE

(30) Priority: 30.09.2022 IT 202200020178
(43) Date of publication of application: 03.04.2024
(73) Proprietor: Aferetica S.r.l., 40138 Bologna (IT)
(72) Inventor: ATTI, Mauro, 40138 Bologna (IT)
(74) Representative: Studio Torta S.p.A.

(56) References cited:
- CN-A- 112 400 866
- US-A1- 2014 017 657
- US-A1- 2016 095 310
- UK NHS BLOOD AND TRANSPLANT DATABASE (BTDB): "NATIONAL OPERATING PROCEDURE NOP003v2 - Packaging, Labelling and Transport of Organs in Deceased and Living Donation and Transplantation", 6 December 2016 (2016-12-06), XP093038277, Retrieved from the Internet <URL:https://nhsbtdbe.blob.core.windows.net/umbraco-assets-corp/4389/packaging-_labelling_and_transport_of_organs_in_deceased_and_living_donation_and_transplantation_-_nop003.pdf> [retrieved on 20230411]
- WUNDERLICH HEIKO ET AL: "DTG Procurement Guidelines in Heart Beating Donors", TRANSPLANT INTERNATIONAL., vol. 24, no. 7, 13 June 2011 (2011-06-13), GB, pages 733 - 757, XP093038280, ISSN: 0934-0874, DOI: 10.1111/j.1432-2277.2011.01266.x
- SATHYAN ASULABHA ET AL: "An advanced approach for an efficient mode of organ transportation", MATERIALS TODAY: PROCEEDINGS, vol. 47, 1 January 2021 (2021-01-01), NL, pages 5358 - 5363, XP093038363, ISSN: 2214-7853, DOI: 10.1016/j.matpr.2021.06.085

## Description

### TECHNICAL SECTOR OF THE INVENTION

The present invention relates in general to the storage and transport of biological material, in particular organs (e.g. kidneys, pancreas, liver and heart), e.g. from transplantation, cells and tissues.

In particular, the present invention relates to a device for the storage and transport of biological material, in particular organs, cells and tissues. Without any loss of generality, the following refers to a device designed for the storage and transport of a transplant organ and possibly biological samples of cells and/or tissues.

The present invention is advantageously usable for transporting biological material between various medical facilities for the purpose of performing transplants, laboratory analyses and the like.

### BACKGROUND OF THE INVENTION

As shown by recent data and statistics, in Piedmont about 99.5% of transports of biological material, in particular organs, cells and tissues, take place intra-regionally. It follows that the optimal storage of biological material during its transport is a non-negligible requirement, as poor storage of biological material can compromise it, e.g. leading to loss of graft (i.e., transplant organ tissue) in the case of transplant organs or compromise of cells or tissue for laboratory analysis.

In more detail, in order to ensure proper storage of biological material during the transport thereof, it must be kept in a specific temperature range that guarantees its proper storage and preservation during transport. In particular, depending on the type of biological material, the optimal temperature range varies. For example, optimal temperature ranges for different types of biological materials are listed below:
- organs: 2-6°C; and
- biological samples: room temperature.

Some known storage and transport devices are briefly described below.

An early example of known storage and transport devices is Avionord's GISTO device, which comprises a rigid container containing a bag system; specifically, the bag system comprises a first bag, housing the organ to be transported and a transport liquid, and a second bag designed to contain the first bag. The rigid container is then contained in a polystyrene container containing ice.

A further example of a known storage and transport device involves a bag system comprising a first bag, containing the organ and the transport liquid; a second bag containing the first bag; and a third bag containing the second bag. The bag system is then contained in a polystyrene container containing ice. An example for this approach is described in H. Wunderlich et al., "DTG Procurement Guidelines in Heart Beating Donors", TRANSPLANT INTERNATIONAL, vol. 24, no. 7, June 2011, pages 733-757, XP09303828, where the first bag contains cold preservation solution, and each of the second bag and the third bag contains cold Ringer's lactate or saline.

### OBJECT AND SUMMARY OF THE INVENTION

In light of the above observations, the Applicant has noted that the known solutions could be improved, in particular to improve the storage conditions of biological material during transport thereof. In particular, considering known devices, the Applicant felt the need to improve the way in which biological material is stored, particularly in the case of organs for transplantation, even more so from the point of view of the thermo-insulation and thermo-conditioning thereof in an efficient and stable manner for the purpose of storage during transport.

The present invention therefore aims to solve the above-mentioned problems of the known art by implementing a device for the storage and transport of biological material, in particular organs, cells and tissues.

According to the present invention, a device for the storage and transport of biological material, in particular organs, cells and tissues, as claimed in the appended claims, is thus realised.

### BRIEF DESCRIPTION OF THE DRAWINGS

Figure 1 illustrates a perspective view of a device for the storage and transport of biological material according to a preferred embodiment of the present invention.
Figures 2 and 3 illustrate perspective views of the device for the storage and transport of biological material in Figure 1 with extracted parts.
Figures 4A-4C illustrate perspective views with exposed parts of a container for the storage of an organ during transport.
Figures 5A-5B illustrate perspective views of parts of the device for the storage and transport of biological material in Figure 1.
Figures 6A-6B schematically illustrate an *ex vivo* perfusion system that can be coupled to a container of the device for the storage and transport of biological material in Figures 4A-4C.
Figures 7A-7B illustrate perspective views with exploded parts of a device for the storage and transport of biological material according to another embodiment of the present invention.

### DETAILED DESCRIPTION OF PREFERRED EMBODIMENTS OF THE INVENTION

As also better described below, the present invention relates to a device for the storage and transport of biological material, in particular an organ (in particular, single or double kidney, pancreas, liver and/or heart); further biological material comprising, for example, biological samples of cells and/or tissues, which are transported in specific compartments of said device, as also better described below with reference to the Figures. Furthermore, the device can reach a total weight of, for example, around twenty-five kilos. More specifically, the device is designed to carry a weight of approximately five kilos of biological material (i.e. including the organ to be transported and the liquids for transport) .

Note also that in the following, without any loss of generality, reference is made to a device designed to transport an organ, e.g. to be perfused *ex vivo* and transplanted, and biological samples, e.g. of cells and/or tissues.

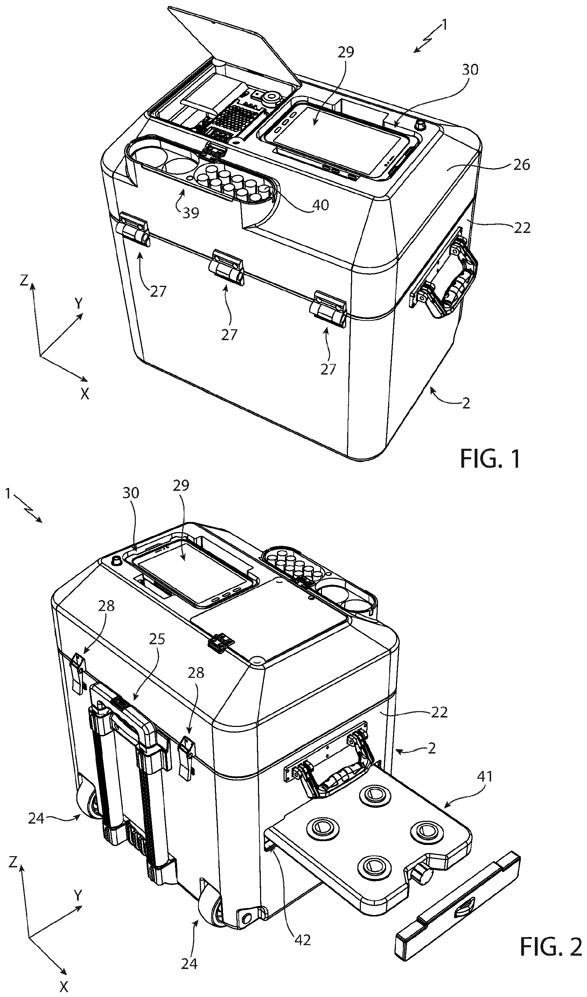

Figures 1-3 and 5 show a device 1 for the storage and transport of biological material, in particular an organ and possibly biological samples of cells and/or tissues. The device **1** comprises an isothermal container **2** housing in use a container **3** for an organ designed to contain the organ to be transported. In particular, the isothermal container **2** is designed to maintain a storage temperature for transporting the organ, as described in more detail below.

In particular, the **1** device is a static organ-preserving device, i.e., a device designed to transport marginal organs (i.e., organs requiring *ex vivo* perfusion) and non-marginal organs (i.e., organs not requiring *ex vivo* perfusion) and in which an active thermoregulation system is absent.

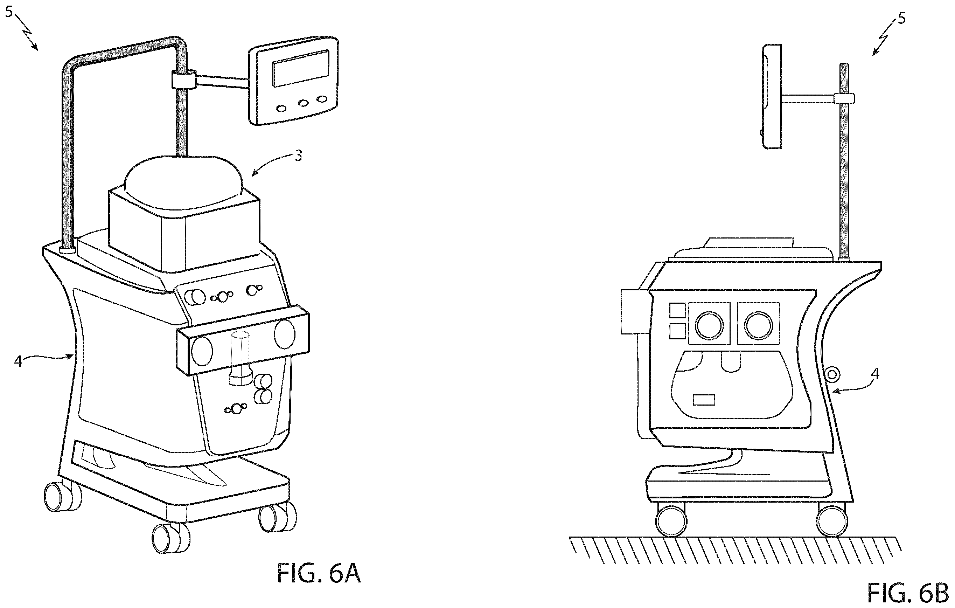

The container **3** is designed to be couplable to, for example, an electro-medical unit **4** of an *ex vivo* perfusion system **5,** shown schematically in Figures 6A-6B; therefore, according to an aspect of the present invention, the device **1** is designed to allow preservation of the transplant organ, for example for an *ex vivo* perfusion procedure, executable by means of the *ex vivo* perfusion system **5,** so as to preserve it, reduce the ischemia time and improve the success rate of a subsequent transplant.

The device **1** comprises a bag system, at least partially in contact with the organ and, in general, the biological material to be transported; in particular, the bag system is designed to preserve the organ and, in general, the biological material from the external environment and to contain a biological support liquid, also referred to hereinafter as storage liquid, during transport.

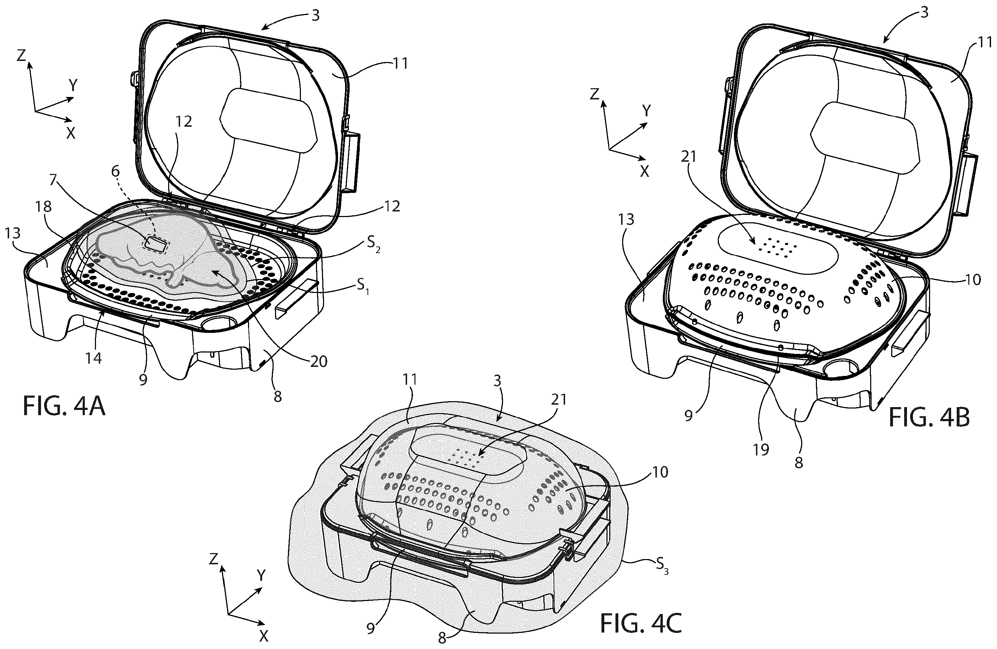

In particular, with reference to Figures 4A-4C, the bag system comprises:
- a first bag **S1** designed to contain the organ (in Figure 4A, a liver is shown by way of example) to be housed in the container **3** and the storage liquid (e.g. a hyperpo-tassic solution such as Celsior^{®} solution) for the storage of the organ in particular during transport thereof in the device **1;** and
- a second bag **S2** designed to contain the first bag **S1,** containing the organ and the storage liquid, and a vibration dampening liquid (e.g. saline), i.e. a liquid to reduce the transmission of vibrations to the organ during the transport thereof.

The first and the second bags **S1, S2** are housed in the container **3.**

In addition, the bag system comprises a third bag **S3** designed to contain the container **3,** as well as the first and second bags **S1, S2,** to ensure the sterility thereof during transport.

In detail, the bags **S1-S3** are sterile so as to maintain the sterility of the organ to be transported.

The first and second bags **S1, S2** are housed in the container **3** and the third bag **S3** is designed to envelop the container **3,** so as to ensure the sterility thereof during organ transport. In other words, the third bag **S3,** enveloping the bags **S1-S2** and, thus, the organ, acts as a barrier against possible contamination.

The device **1** comprises a pocket **6** designed to house a temperature sensor **7** (e.g., equipped with short-range, low-power connectivity, e.g., Bluetooth), which is designed to detect indicative quantities of parameters relating to the condition of the organ in the container **3,** in particular the temperature of the environment surrounding the organ contained in the first bag **S1** and generate corresponding data; in this way, it is possible to monitor the temperature at which the organ is placed during its transport in the device **1.** According to an embodiment of the present invention, shown in Figure 4A, the pocket **6** is integrated into the first bag **S1,** i.e. it is formed in the first bag **S1.** According to an aspect of the present invention, the pocket **6** is hermetically sealed; furthermore, the first bag **S1** is designed to be able to contain the temperature sensor **7** without it necessarily being sterilised before it can be inserted into the pocket **6.**

According to a further embodiment of the present invention, not shown herein, the temperature sensor **7** is arranged in a dedicated bag, not shown and separate from the bags **S1** and **S2,** arranged in the second bag **S2;** in particular, the bag containing the temperature sensor **7** is hermetically sealed to avoid contact between the liquid inside the second bag **S2** and the temperature sensor 7.

According to a preferred embodiment of the present invention, the temperature sensor **7** is designed to detect a temperature range comprised, for example, between -15°C and 45°C.

The first bag **S1** is made of a biocompatible and sterile material, so that the organ to be transported is not in contact with a material that could compromise it during transport; in addition, the material of which the first bag **S1** is made is resistant so that the first bag **S1** itself does not break during transport. In particular, according to an aspect of the present invention, the first bag **S1** is made of polyurethane or polyethylene. In addition, according to a further aspect of the present invention, the materials of the bags **S2** and **S3** are also resistant so that they do not break during transport. In particular, according to an aspect of the present invention, the bags **S2** and **S3** are made of polyurethane or polyethylene.

In addition, the storage liquid fills the first bag **S1** according to a predefined volume. In particular, the total volume inside the first bag **S1,** i.e. including the organ to be transported and the storage liquid, is for example about 3.5 litres.

The vibration dampening liquid in the second bag **S2** is, for example, a refrigerated saline solution and has a predefined volume here, e.g. about 1.5 litres, so as to effectively reduce the vibrations resulting from transporting the organ.

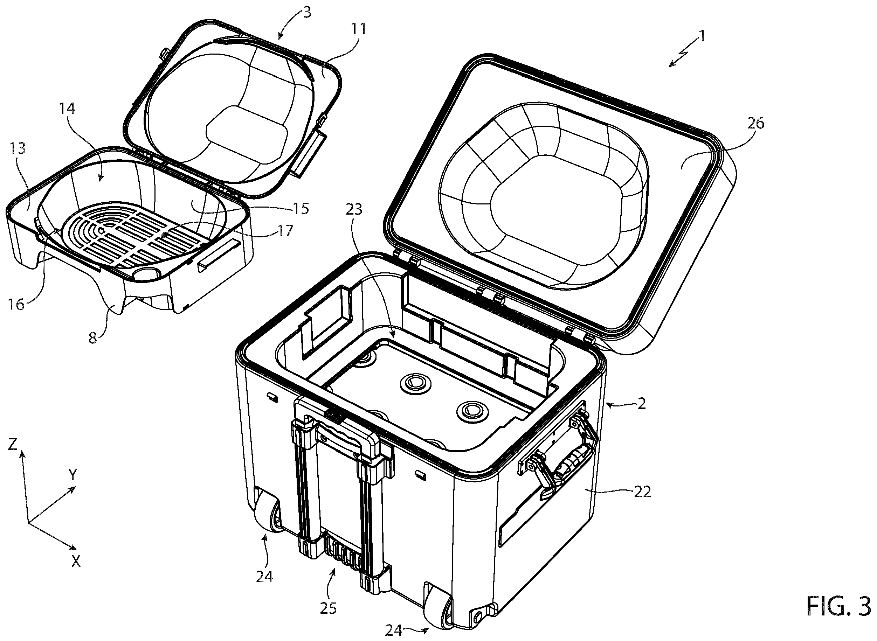

With reference to Figures 3 and 4A-4C, the container **3** comprises:
- a base **8;**
- a first screen **9** carried by the base **8** and designed to support and carry the organ, in particular the bags **S1-S2** containing the storage and vibration dampening liquids and the organ to be transported (Figure 4A);
- a second screen **10,** which can be positioned, in use, on the first screen **9** so as to form with it a space (not shown) in which to house the organ, in particular the bags **S1-S2** containing the storage and vibration dampening liquids and the organ to be transported; and
- a lid **11** hinged to the base **8** at hinges **12** and configured to move from an open position to a closed position.

In particular, in the open position, the lid **11** allows a user to have access to the first screen **9,** the organ and/or the second screen **10,** as shown in Figures 4A-4C. In the closed position, the lid **11** is arranged so as to cover the first and second screen **9, 10** (Figure 4C), so as to insulate the organ from the external environment (here contained in the bags **S1, S2**
with storage and vibration dampening liquids) to be transported, so as to protect it from external influences that could damage it. According to an aspect of the present invention, the lid **11** is made of transparent material, e.g. polyurethane, in particular ABS, so that a user can monitor the inside of the container **3.**

According to a further aspect of the present invention, the lid **11** can be coupled to the base **8** with a single hinge **12.**

The **8** base here has a quadrangular shape from the top view (e.g. rectangular with rounded corners) and is e.g. made of acrylonitrile-butadiene-styrene (ABS). The base **8** comprises a peripheral portion **13,** conformed so as to be coupled to a reservoir, e.g. containing perfusion fluid for *ex vivo* perfusion of the organ e.g. by means of the *ex vivo* perfusion system **5** of Figures 6A-6B. Moreover, the hinges **12** are here arranged along one side (e.g., a long side) of the peripheral portion **13** of the base **8;** in the case of a single hinge **12** , the latter is, for example, arranged centrally along, e.g., the long side (extending parallel to an X axis of a Cartesian reference system XYZ) of the peripheral portion **13** of the base **8.** The base **8** further comprises a central portion **14** (shown in detail in Figure 3), which has a convex shape, in particular, along a Z axis of the Cartesian reference system XYZ, being lower than the peripheral portion **13.** The central portion **14** comprises a curved portion **15,** adapted to join the peripheral portion **13** with a base portion **16,** also forming part of the central portion **14.** The central portion **14** is further provided with openings **17,** arranged in the base portion **16** and designed to allow a fluidic connection between the base **8** and the reservoir for example of the *ex vivo* perfusion system **5** of Figures 6A-6B.

Again with reference to Figures 4A-4C, the first and second screens **9, 10** comprise a respective peripheral portion **18, 19.** In particular, the peripheral portion **18** of the first screen **9** is shaped to be coupled to the peripheral portion **13** of the base **8;** further, the peripheral portion **19** of the second screen **10** being designed to allow the second screen **10** to be positioned in contact with the peripheral portion **18** of the first screen **9** when in use.

The first and second screen **9, 10** also comprise respective support portions **20, 21.** In particular, the support portion **20** of the first screen **9** is designed to support the organ to be transported, is of a curved shape, in particular convex, i.e. it is, along a Z axis of a Cartesian reference system XYZ, lowered with respect to the peripheral portion **18;** moreover, the support portion **21** of the second screen **10** is also curved, in particular convex, i.e. it is, along a Z axis of a Cartesian reference system XYZ lowered with respect to the peripheral portion **19** and is designed to define, when the second screen **10** is placed on the first screen **9,** the space adapted to house the organ enveloped in the first and second bags **S1, S2.** In other words, the second screen **10** is arranged so that its concave portion faces towards the first screen **9,** in such a way that the respective support portions **20, 21** face each other, in particular with their respective concavities facing each other, i.e., the second screen **10** is arranged so as to be overturned with respect to the first screen **9.** Consequently, the respective convex portions of the support portions **20, 21** face the central portion **14** and the lid **11** of the container **3** respectively (see in particular Figure 4C).

According to an embodiment of the present invention, the support portions **20,** 21 of the first and second screens **9, 10** are sized according to the size of, for example, an adult kidney and an adult liver, respectively. In particular, the support portion **20** is sized to support organs such as an adult kidney, which has an average length comprised between 13 cm and 14.5 cm, a width of 8 cm and a thickness of 3 cm; therefore, the support portion **20** occupies only part of the first screen **9,** e.g. almost half of the latter and is arranged, for example, along the long as the same first screen **9** itself. The remaining portion of the first screen **9,** e.g. the remaining half, is dedicated to the peripheral portion **18.** Moreover, the support portion **21** is sized to accommodate a larger organ than an adult kidney, e.g., an adult liver, which has an average right lobe thickness comprised between 12 cm and 15 cm, a transverse diameter of about 25 cm and an antero-posterior diameter of about 15 cm; therefore the support portion **21** almost entirely occupies the area of the second screen **10,** leaving an external frame-like portion dedicated to the peripheral portion **19.**

It should be noted that, according to an aspect of the present invention, the support portion **20** of the first screen **9** is substantially coplanar with the peripheral portion **18,** i.e., the first screen **9,** when conformed to support an adult kidney, is substantially parallel to an XY plane of the XYZ reference system; in this case, the second screen **10** has a support portion **21** with a greater convexity than the support portion **20** of the first screen **9,** i.e., it is recessed with respect to the peripheral portion **19** along the Z axis of the Cartesian reference system XYZ.

According to an aspect of the present invention, the first and second screens **9, 10** are made of soft, biocompatible and atraumatic material, in particular polyurethane ester. Furthermore, according to a further aspect of the present invention, the second screen **10** is designed to cover, when overturned so as to expose its convexity towards the lid **11** and its concavity towards the first screen **9** and contact its peripheral portion **19** with the peripheral portion 18 of the first screen **9,** the first screen **9** when the latter carries the organ contained in the bags **S1-S2.** In other words, the second screen **10** acts as a dome for the first screen **9** so as to cover the organ contained in the bags **S1-S2.**

It should also be noted that the base **8** and the lid **11** are designed to define, when the lid **11** is in the closed position, a space adapted to contain both screens **9, 10,** i.e. the container **3** has a volume such that it can contain the second screen **10** when it is overturned towards the first screen **9.**

It should be noted that the different sizing of the support portion **20** in the first and second configurations of the first screen **9** does not affect the total dimensions of the first screen **9** itself, which are therefore fixed; therefore, the dimensions of the first screen **9** are independent from the type of organ to be transported, as no different sizing of the entire container **3** is required. This feature allows for a container **3** with standard dimensions. Similar considerations apply to the second screen **10,** which has fixed total dimensions.

With reference to Figures 1 to 3, the isothermal container **2** comprises a main body **22** having a compartment **23** adapted to receive and contain the container **3** in particular when the latter is inserted into the isothermal container **2** for transporting the organ. In particular, the main body **22** is equipped with handling means, here wheels **24** and handles **25,** which allow manual handling of the isothermal container **2.** In this way, the device **1** is transportable both by land and by air.

In particular, the main body **22** is designed as an insulating structure that provides optimised insulation with thin layers. In particular, the insulation structure is multi-layered and comprises polyurethane foam, ABS and PMMA (polymethyl methacrylate), the latter forming the outer surface of the main body **22.** By way of non-limiting example, the ABS and PMMA layers have a maximum total thickness of (i.e. less than or equal to) approximately 4 mm and the polyurethane foam layer of approximately 200 mm. According to a further aspect of the present invention, the ABS and PMMA layers also cover the inner part (i.e. the part defining the compartment **23)** of the main body **22.** According to a further embodiment of the present invention, the insulation structure comprises aerogel or expanded polyethylene.

The isothermal container **2** comprises a lid **26** movably coupled to the main body **22,** in particular hinged to the main body **22** at hinges **27** (e.g., arranged along one long side, i.e., parallel to the X axis of the Cartesian reference system XYZ), so as to assume a respective first and second position. The isothermal container **2** further comprises closing elements **28** (e.g., snap closure devices) designed to releasably couple the lid **26** to the main body **22,** in particular by assuming a coupling position and an uncoupling position, wherein the coupling position provides that the closing elements **28** mechanically couple the main body **22** and the lid **26** and the uncoupling position provides that the closing elements **28** mechanically uncouple the lid **26** and the main body **22.** Therefore, in the first position, the lid **26** is designed to make the compartment **23** accessible from the outside; at this stage, the closing elements **28** are in the decoupling position. In the second position, the lid **26** is designed to make the compartment **23** not accessible from the outside, i.e. to insulate it from the external environment; at this stage, the closing elements **28** are in the coupling position. The second position is used, for example, when the container **3** is placed in the isothermal container **2** and, therefore, the organ contained in the container **3** is ready to be transported.

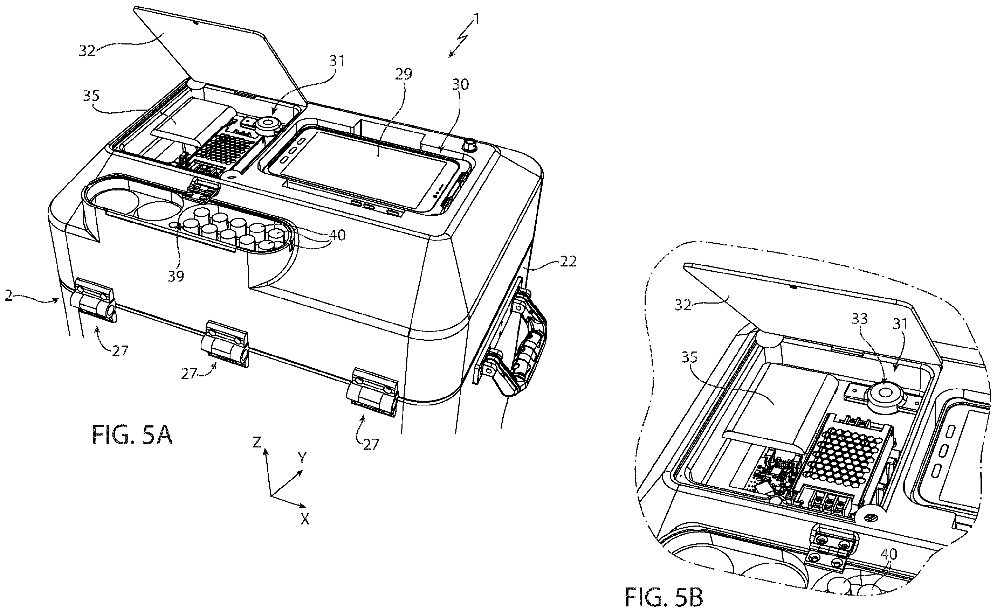

With reference to Figure 1 and Figure 5 and as explained below, the device **1** comprises an operator terminal **29,** e.g. a tablet, which can be removably coupled to the isothermal container **2;** in particular, the operator terminal **29** is designed to display a graphical interface, e.g. to allow monitoring of parameters relating to the transport of the biological material, comprising for example organ temperature, external temperature and acceleration values of the device **1,** in particular to detect any shocks/sudden movements. In addition, the operator terminal **29** is designed to support short-range connectivity, e.g. Bluetooth, to communicate with the temperature sensor **7,** and with a sensor system **33,** as further explained below.

The operator terminal **29** is also equipped with a GPS (Global Positioning System) tracking system to determine the position of the device **1** during the transport of biological material.

In addition, the operator terminal **29** supports long-range connectivity, for example by supporting a connection by means of SIM or Wi-Fi, which allows the operator terminal **29** to be connectable to computer processing and storage resources (not shown) in order to communicate with them, for example to transmit parameters relating to the transport of biological material and parameters relating to the condition of the organ in the container **3.** According to an aspect of the present invention, the computer processing and storage resources implement the cloud computing paradigm (and therefore a cloud); further, the computer processing and storage resources are designed to communicate with external mobile and/or stationary user terminals (e.g., smartphones, tablets, desktop computers and the like), for example to transmit notifications regarding the transport of biological material. In particular, external mobile and/or stationary user terminals support long-range connectivity, e.g. by supporting a SIM or Wi-Fi connection, and are designed to connect with computer processing and storage resources.

The operator terminal **29** can be coupled, in particular positioned, in a releasable manner in a compartment **30,** e.g. it is held within the compartment **30** by clamp elements (not shown). In addition, the device **1,** in particular the lid **26,** comprises an electronic panel **31,** in particular accessible through the opening of a corresponding lid **32,** adapted to house the sensory system **33** designed to detect quantities indicative of parameters relative to the transport conditions of the biological material (in particular, external temperature and acceleration of the device **1)** and generate corresponding data.

The electronic panel **31** is also adapted to house:
- a backup tracker device **34** designed to determine the geographic position of the device **1** in particular in the absence of the operator terminal **29** or in the event of a malfunction of the operator terminal **29,** in particular of the GPS localisation system integrated into the operator terminal **29;** and
- a battery **35,** in particular rechargeable, connected to the operator terminal **29** and to the sensor system **33** designed to power it when in use.

In particular, the battery **35** is designed to be recharged especially when the device **1** is not operational, i.e. when organ transport is not required.

In addition, the backup tracker device **34** further comprises an internal rechargeable battery (not shown) designed to power it when in use.

According to an aspect of the present invention, the battery **35** and the battery of the backup tracker device **34** are rechargeable with an external power supply (not shown), e.g. power cables.

The sensory system **33** comprises:
- a temperature sensor designed to detect quantities relative to the temperature of the environment outside the isothermal container **2,** in particular outside the compartment **23,** and generate corresponding data; and
- a stress sensor, in particular a triaxial accelerometer, designed to detect quantities indicative of the movement of the device **1,** in particular acceleration components along XYZ axes of a Cartesian reference system XYZ, when it is moved, in particular external stresses, and generate corresponding data.

In particular, according to an embodiment of the present invention, the temperature sensor and the stress sensor of the sensory system **33** are integrated into the same electronic component, i.e. the sensory system **33** is a single electronic component. In particular, the temperature sensor of the sensory system **33** makes it possible to monitor that the temperature conditions of the isothermal container **2** are close to room temperature (i.e., approximately 25°C), so that the efficiency of the device **1** during the transport of biological material is guaranteed. Therefore, the temperature sensor **7** and the sensor system **33** monitor the internal (i.e., in the vicinity of the transported organ) and external temperature of the device **1** respectively.

The operator terminal **29** is designed to receive and process data from the stress sensor to verify that the device **1** is not subjected to excessive stress that could compromise organ transport. In this regard, according to an aspect of the present invention, the device **1** comprises a software application, installable on the operator terminal **29** (in particular, according to a preferred embodiment of the present invention, it is pre-installed on the operator terminal **29),** which is designed so that, when run on the operator terminal **29,** it is designed to:
a) receive and store the data coming from the stress sensor;
b) compare the values associated with the data coming from the stress sensor with a confidence interval, e.g. less than or equal to 5g (i.e. five times gravitational acceleration);
c) determine that, if the values associated with the data coming from the stress sensor are beyond the confidence interval, the device **1** is subject to stress that could compromise the transport of the organ; and
d) generate an alert notification according to the result data to be transmitted to the computer processing and storage resources.

According to an aspect of the present invention, the software application is designed so that, when run on the operator terminal **29,** it is designed to display data from the stress sensor, for example by means of a graphical representation.

Therefore, the operator terminal **29** is designed to interface with the sensory system **33** and the temperature sensor **7,** which provide the operator terminal **29** with data on the quantities indicative of parameters relating to the transport of the biological material and relating to the condition of the organ in the container **3** to enable it to be monitored during the transport of the biological material. According to an aspect of the present invention, the device **1** comprises a software application, which is installable on the operator terminal **29** (in particular, according to a preferred embodiment of the present invention, it is pre-installed on the operator terminal **29),** which is designed so that, when run on the operator terminal **29,** it is designed to:
- receive and store the data relative to the quantities indicative of the parameters relative to the transport of the biological material (i.e., data transmitted by the sensory system **33** and thus comprising data generated by the temperature sensor and the stress sensor **33**) and the data relative to the quantities indicative of parameters relative to the conditions of the organ in the container **3** (i.e., data transmitted by the temperature sensor **7**);
- process the data relative to the quantities indicative of the parameters relative to the transport of the biological material and the data relative to the quantities indicative of parameters relative to the conditions of the organ in the container **3** to generate information indicative of the transport of the biological material (e.g. graphical representations relative to the time trend of the aforesaid parameters); and
- generate and transmit notifications to the computer processing and storage resources, e.g. to notify any extraordinary events, e.g. if pre-set temperature and acceleration thresholds for the proper transport of biological material are exceeded.

Therefore, the operator terminal **29** is designed to transmit alert notifications depending on the indicative quantity data of the parameters relative to the transport of biological material.

Furthermore, according to a further aspect of the present invention, the operator terminal **29** is designed to receive and process the data generated by the sensory system **33** and the temperature sensor **7** for showing the trend of the parameters relative to the transport of the biological material, in particular in terms of external and internal temperature and stresses suffered, on the same operator terminal **29** (for example, by showing it in the form of a graph or similar graphic representation on the screen of the tablet).

The computer processing and storage resources are designed to:
- receive and store the data relative to the quantities indicative of the parameters relative to the transport of the biological material and the data relative to the quantities indicative of parameters relative to the conditions of the organ in the container **3** from the operator terminal **29;**
- at the end of the transport procedure, process the data relative to the quantities indicative of the parameters relative to the transport of the biological material and the data relative to the quantities indicative of parameters relative to the conditions of the organ in the container **3** to generate reports indicative of the transport of the biological material; and
- generate and transmit notifications to mobile and/or stationary user terminals and/or to the operator terminal **29,** e.g. by email, relative to the availability of the reports to be downloaded by accessing the computer processing and storage resources.

The computer processing and storage resources are further designed to:
- receive and store notifications relative to any extraordinary events received from the operator terminal **29;** and
- generate and transmit notifications to mobile and/or stationary user terminals relative to any extraordinary events notified by the operator terminal **29.**

Therefore, the computer processing and storage resources are designed to alert users by means of alarm notifications of any extraordinary events. In order to be able to download the reports generated by the computer processing and storage resources, a software application , which can be downloaded and installed on external mobile and/or stationary user terminals or accessed via the Internet by the latter (therefore, a web software application), is designed so that, when run on the external mobile and/or stationary user terminals, the latter are designed to:
- allow registration and access to a personal account associated with a said external mobile and/or stationary user terminal;
- ensure that the external mobile and/or stationary user terminal receives the notification, e.g. by e-mail, of the availability of reports to be downloaded by accessing computer processing and storage resources and/or the presence of extraordinary events;
- allow an operator to download reports via the external mobile and/or stationary user terminal.

An operator is then able to download reports relating to the transport of biological material by accessing the computer processing and storage resources through the software application; for example, the operator is able to access the computer processing and storage resources through a website by means of his/her personal account.

In particular, depending on the role in the structure to which he or she belongs, the operator is authorised to view information and documents uploaded to computer processing and storage resources. In more detail, at least the following roles are envisaged:
- administrator, who is empowered to:
   - create, modify and remove facilities from a list of facilities that can access computer processing and storage resources;
   - perform any operation of creating invitations for the creation of a personal account or editing personal account information; and
   - view missions, i.e. active or ongoing transport of biological material;
- administrator of the facility he/she pertains to, e.g. a hospital, who is empowered to:
   - modify the data relating to the facility they pertain to;
   - create invitations to create personal accounts, modify data and associate the relevant facility - create, invite, modify and associate personal accounts with the facility they pertain to; and
   - view ongoing or completed missions related to the facility they pertain to;
- medical personnel, qualified to:
   - create, view and/or terminate a mission; in particular, when creating a new mission, they are empowered to select the facilities with which they are associated, e.g. by defining the departure and destination facilities for the transport of biological material; and
   - have access to all missions, whether ongoing or completed, of the facilities with which they are associated, and
- driver of the vehicle for the transport of biological material, who is entitled to have access to the accepted missions for which transport is in progress and to the completed missions for which transport has been carried out. They are also empowered to take charge of a mission created and not yet assigned.

Therefore, depending on the role, an operator is able to have access to functions, information and documents that enable the analysis of the transport of biological material.

It should be noted that when the administrator or facility administrator generates and sends these invitations, they allow an operator to register. In particular, once the operator's personal data has been entered, the administrator or the administrator of the facility to which he/she pertains generates and sends the aforementioned invitations, so that the operator, upon receiving the invitation, can associate a password with his/her personal account and thus finalise the personal account creation procedure.

With reference to Figures 1 and 5A-5B, the lid **32** is further provided with a sample-holder compartment **39** provided with slots **40** designed to house biological samples, e.g. cells or tissues to be transported; further, according to an aspect of the present invention, the sample-holder compartment **39** is provided with a layer of insulating material, in particular expanded polyurethane, which allows to maintain the biological samples within the slots **40,** thermally insulate them and reduce the impact of any shocks on them.

The main body **22** also has at least one pocket (not shown) to accommodate documents to be transported with the biological material.

Referring to Figure 2, the isothermal container **2** comprises a thermo-conditioning panel **41,** e.g., a phase change panel, (PCM, Phase Changing Material) or eutectic plate, housed in a slot **42** formed in the main body **22** and adapted to receive the thermo-conditioning panel **41** and allow at least partial extraction thereof; in particular, the thermo-conditioning panel **41** is designed to allow the maintenance of the temperature for the storage of the biological material, in particular of the organ inside the container **3** inserted inside the isothermal container **2.** The thermo-conditioning panel **41** is made of phase change material, e.g. a panel containing a solution of salt in water operating according to the PCM PlusICE E-3 model (i.e., with a triple point temperature of -3°C), such that when it absorbs or releases heat, it changes its state so as to bring the temperature in the compartment **23** within a temperature range, e.g. comprised between 2°C and 6°C, and maintain it there. In particular, the phase change material is able to change its state, specifically from liquid to solid and vice versa, as a result of the release and absorption of heat, respectively.

In more detail, when the thermo-conditioning panel **41** is taken out from the slot **42,** the same thermo-conditioning panel **41** is cooled so that the phase-change material is solid. Subsequently, the thermo-conditioning panel **41** is inserted into the slot **42** of the compartment **23;** in this way, the phase change material, being in an environment with a temperature higher than its own temperature, begins to absorb heat, cooling the compartment **23,** so that it reaches a temperature comprised between 2°C and 6°C. Upon reaching melting point, here the temperature of the triple point, the phase change material of the thermo-conditioning panel **41** begins to melt, becoming liquid at the end of the melting process; therefore, upon reaching the triple point, i.e. when the melting process begins, the phase change material continues to absorb heat, enabling the temperature inside the compartment **23** to be maintained almost constant, for example for at least 36 hours, particularly in the temperature range between 2°C and 6°C. It should be noted that since the thermo-conditioning panel **41** is no longer capable of absorbing heat when its constituent material is completely melted, the temperature inside the compartment **23** may gradually increase, indicatively to above 6°C. The aforementioned maintenance of the temperature inside the compartment **23** is also permitted thanks to the fact that the isothermal container **2** is made of insulating materials, so that the temperature of the compartment **23** is kept constant for a longer period of time, in particular such that the biological material can be transported without significant thermal shock problems that could compromise the biological material. In other words, the presence of the thermo-conditioning panel **41** and the insulating materials of the isothermal container **2** allow the temperature in the compartment **23** to be kept constant for the time required to transport the biological material.

It should be noted that, according to an aspect of the present invention, the container **3,** the isothermal container **2,** the third bag **S3,** and the sample compartment **39** envisage anti-tamper labels.

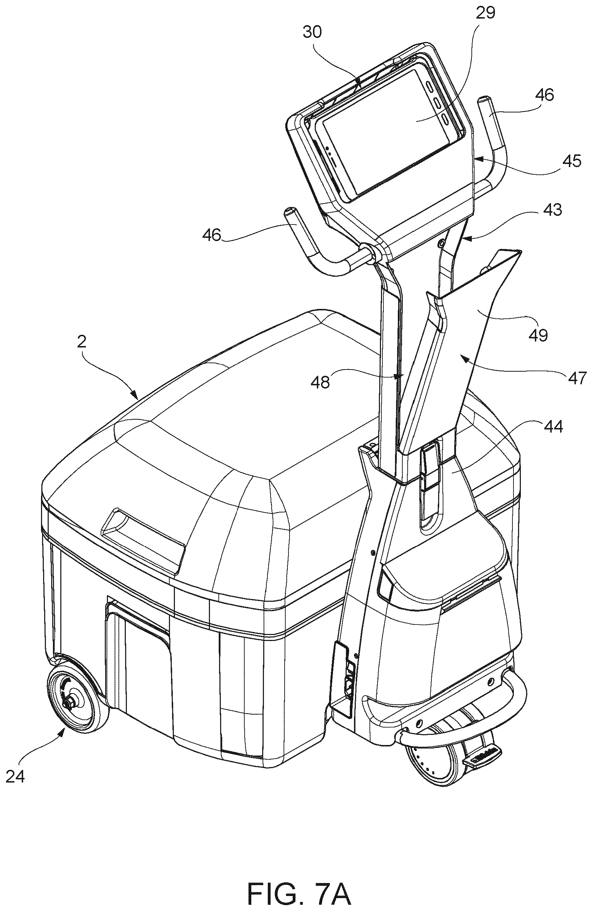

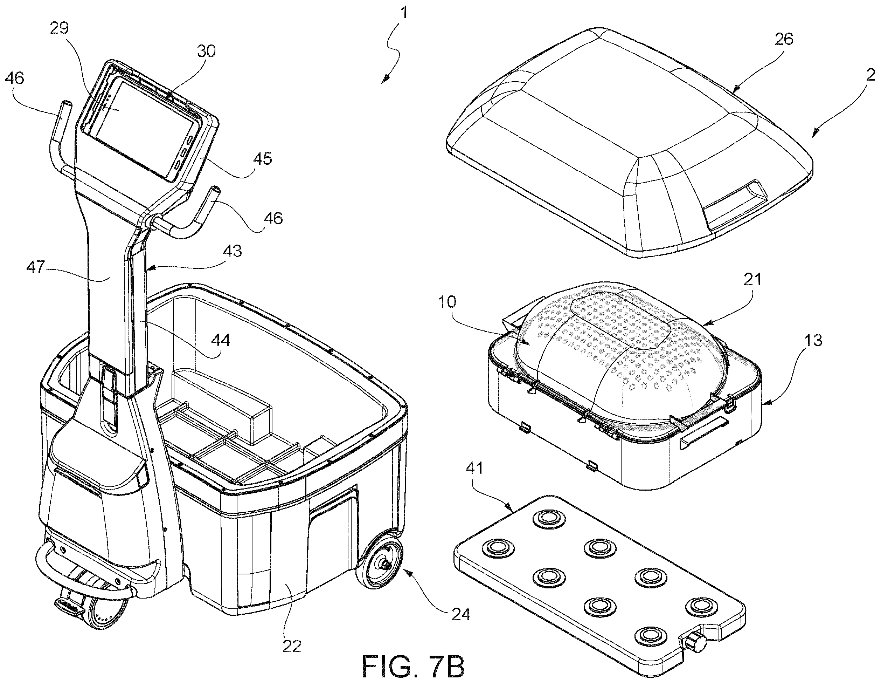

Figures 7A and 7B show a further embodiment of device 1 according to the present invention. In particular, in Fig-ures 7A-7B, parts that are common to those shown with reference to Figures 1-3, 4A-4C and 5A-5B are indicated in Figures 7A and 7B with the same reference numbers and will not be described further hereinafter.

In particular, the device **1** of Figures 7A and 7B comprises a conveyor trolley **43** including an upright **44** designed to connect the isothermal container **2** with the user terminal **29,** as well as to carry the same user terminal **29** at a corresponding support portion **45;** as also shown in Figures 7A and 7B, the user terminal **29** can be coupled, in particular positioned, in a releasable manner in the compartment **30,** here formed in the support portion **45,** even more specifically maintained inside the compartment **30** by means of clamp elements (not shown). The conveyor trolley **43** further comprises a pair of handles **46,** conveniently placed to the side of the user terminal **29,** to allow transport of the isothermal container **2.** In addition, the transport trolley **43** comprises a document holder **47,** in particular a compartment **48** accessible by means of a cover **49,** arranged on the upright **44** to allow the transport and accessibility of documents useful for the transported organ.

It is further noted that, in the embodiment of Figures 7A and 7B, the lid **26** of the isothermal container **26** is coupled to the main body **22** by means of connecting means (not shown), such as, for example, magnets or the like; in this way, the lid **26** and the main body **22** are without hinges but nevertheless appropriately connected to each other when in use.

This device has several advantages.

In particular, the **1** device provides a single system for transporting organs, biological samples and accompanying documentation in dedicated compartments.

In addition, the device **1** allows the organ to be physically separated from its thermo-conditioning and thermo-insulation system. In particular, the thermo-conditioning panel **41** enables thermo-conditioning, i.e. maintaining the ideal transport temperature to keep the organ as intact as possible during transport. On the other hand, thermo-insulation is achieved through the use of thermo-insulating materials, in particular ABS, PMMA, expanded polyethylene, aerogel of the isothermal container **2.**

In addition, the use of bags **S1-S3,** as well as the container **3,** makes it possible to have an organ containment system that is independent of the type of organ; furthermore, the insertion of a temperature sensor between the bags **S1** and **S2** makes it possible to check the temperature of the organ during transport. Moreover, the container **3** is such that it can then be used in *ex situ* perfusion systems, in pre-transplantation, thus avoiding the need to further transfer the organ from one container to another, an operation that could compromise possible organ operations.

In addition, the device **1** monitors data relating to organ temperature, external ambient temperature, possible stresses and the position of the device **1** during transport; in this way, it is possible to have good control of the transport conditions of the biological material (in particular in terms of monitoring the temperature relative to the organ, monitoring the external temperature, monitoring possible shocks suffered by the system by means of a stress sensor), as well as the position of the latter, so as to be able to generate reports relating to the transport of the biological material and possible alarm notifications in order to warn an operator of critical conditions.

In addition, the present device **1** makes it possible to standardize hospital protocols, as the monitoring of these data makes it possible to guide the workflow (in particular, standardizing the latter, as explained below) and reduce the possibility of errors in the transport of biological material.

In particular, workflow standardization means a procedure to reduce the effect of human error in the procedure of transporting biological material. In particular, this reduction is made possible by:
- the implementation of a sequence of specific instructions that operators, in particular doctors and healthcare personnel, must carry out in the preparation of biological material, in particular insertion into the bag system, insertion of the container **3** and of the latter into the isothermal container **2;-** carrying out the transport of biological material under substantially controlled and repeatable conditions, i.e. with a temperature inside the isothermal container **2** that is uniform and stable over time, resulting in uniform cooling of the organ contained in the container **3** , signalling of events of excessively high internal or external temperature or excessive stress to the device **1,** possibility of tracking the position of the device **1** and monitoring the parameters in real time, thus enabling accurate assessment of the suitability of the organ for transplant after transport, based on the conditions in which it has travelled; and
- definition of a very precise sequence of instructions to be carried out by doctors and healthcare personnel upon receipt of biological material, in particular the removal of the bag system, the repositioning of the organ in the container **3** and the insertion of the container **3** onto the ex *vivo* perfusion system for the subsequent perfusion of the organ contained in the container **3.**

## Claims

1. A device (**1**) for the storage and transport of biological material including at least one organ, the device (1) comprising:
a container (3) designed to contain the organ;
an isothermal container **(2)** configured to house in use the container **(3)** designed to contain the organ; and
a bag system comprising:
- a first bag **(S1)** designed to contain the organ to be housed in the container **(3)** and a storage liquid for storing the organ; and
- a second bag **(S2)** designed to contain the first bag **(S1),** containing the at least one organ and the storage liquid, and a vibration dampening liquid to reduce the transmission of the vibrations on the organ during transport of the organ,
wherein the first and the second bags **(S1, S2)** are housed in the container **(3),**
wherein the bag system further comprises a third bag **(S3)** designed to contain the container **(3)** to ensure the sterility thereof during transport,
and wherein the device **(1)** further comprises a pocket **(6)** designed to house a temperature sensor **(7)** designed to detect indicative quantities of parameters relating to the condition of the organ in the container **(3),** the pocket **(6)** being inside the or integrated into the first bag **(S1)** or being inside the second bag (**S2**).

2. The device (**1**) for the storage and transport of biological material according to claim **1,** wherein the first, the second and the third bags (**S1**) are made of sterile material and wherein the first bag (**S1**) is made of biocompatible and durable material to prevent the first bag (**S1**) from breaking during transport of the biological material.

3. The device (**1**) for the storage and transport of biological material according to claim **1** and further comprising:
- computer processing and storage resources;
- an operator terminal (**29**) removably couplable to the isothermal container (**2**); and
- an electronic panel (**31**) adapted to house a sensor system (**33**) designed to detect quantities indicative of parameters relative to the transport conditions of the biological material and generate corresponding data, the operator terminal (**29**) is designed to support short-range connectivity to communicate with the temperature sensor (**7**) and with the sensor system (**33**) to receive the data relative to the quantities indicative of the parameters relative to the transport of the biological material and the data relative to the quantities indicative of parameters relative to the conditions of the organ in the container (**3**),
the operator terminal (**29**) also being configured to support long-range connectivity which allows the operator terminal (**29**) to be connectable to the computer processing and storage resources to communicate with them;
wherein the device (**1**) further comprises a software application, installable on the operator terminal **(29),** which is designed so that, when run on the operator terminal **(29),** it is designed to:
- receive and store the data relative to the quantities indicative of the parameters relative to the transport of the biological material and the data relative to the quantities indicative of parameters relative to the conditions of the organ in the container (**3**);
- process the data relative to the quantities indicative of the parameters relative to the transport of the biological material and the data relative to the quantities indicative of parameters relative to the conditions of the organ in the container (**3**) to generate information indicative of the transport of the biological material; and
- generate and transmit notifications to the computer processing and storage resources, wherein the computer resources are designed to:
- receive and store the data relative to the quantities indicative of the parameters relative to the transport of the biological material and the data relative to the quantities indicative of parameters relative to the condition of the organ in the container (**3**) from the operator terminal (**29**) ;
- at the end of the transport procedure, process the data relative to the quantities indicative of the parameters relative to the transport of the biological material and the data relative to the quantities indicative of parameters relative to the conditions of the organ in the container (**3**) to generate reports indicative of the transport of the biological material; and
- generate and transmit notifications to mobile and/or stationary user terminals and/or to the operator terminal **(29)** relative to the availability of the reports to be downloaded by accessing the computer processing and storage resources,
and wherein the computer processing and storage resources are further designed to:
- receive and store notifications relative to any extraordinary events received from the operator terminal **(29);** and
- generate and transmit notifications to mobile and/or stationary user terminals relative to any extraordinary events notified by the operator terminal **(29).**

4. The device **(1)** for the storage and transport of biological material according to claim **3**, wherein the sensor system (**33**) comprises:
- a temperature sensor designed to detect quantities relative to the temperature of the environment outside the isothermal container (**2**) and generate corresponding data; and
- a stress sensor, in particular a triaxial accelerometer, designed to detect quantities indicative of the movement of the device (**1**) when it is moved and generate corresponding data,
the device (**1**) further comprises a software application, installable on the operator terminal (**29**), which is designed so that, when run on the operator terminal (**29**), it is designed to:
a) receive and store the data coming from the stress sensor;
b) compare the values associated with the data coming from the stress sensor with a confidence interval;
c) determine that, if the values associated with the data coming from the stress sensor are beyond the confidence interval, the device (**1**) is subject to stress that could compromise the transport of the organ; and
d) generate an alert notification, according to the result data, to be transmitted to the external mobile and/or stationary user terminals.

5. The device (**1**) for the storage and transport of biological material according to any one of claims **3-4,** wherein the isothermal container (2) comprises:
- a main body (**22**) having a compartment (**23**) adapted to receive and contain the container (**3**); and
- a lid (**26**) movably coupled to the main body (**22**) so as to assume a respective first and second position, the lid (**26**) being designed to make the compartment (**23**) accessible from the outside in the first position and to insulate the compartment (**23**) from the outside environment in the second position;
wherein the operator terminal (29) further comprises a Global Positioning System (GPS) ;
and wherein
the electronic panel **(31)** further comprises:
- a backup tracker device **(34)** designed to determine the geographical position of the device **(1);** and
- a battery **(35)** connected to the operator terminal **(29)** and to the sensor system **(33)** designed to power it when in use.

6. The device **(1)** for the storage and transport of biological material according to any one of the preceding claims, wherein the isothermal container **(2)** further comprises a sample-holder compartment **(39)** provided with slots **(40)** designed to house biological samples to be transported, the sample-holder compartment **(39)** being provided with a layer of insulating material which allows to maintain the biological samples within the slots **(40),** thermally insulate them and reduce the impact of any shocks on them.

7. The device (**1**) for the storage and transport of biological material according to any one of the preceding claims, wherein the isothermal container (**2**) further comprises a thermal conditioning panel (**41**) which can be housed in a slot (**42**) formed in the main body (**22**) and adapted to receive the panel (**41**) and to allow at least the partial extraction thereof;
the thermal conditioning panel (**41**) is designed to allow the temperature for storage of the biological material to be maintained.

8. The device (**1**) for the storage and transport of biological material according to claim **7,** wherein the thermal conditioning panel is made of phase change material such that, when it absorbs or releases heat, it changes its state, so as to bring the temperature in the compartment (**23**) up to a temperature interval and maintain the temperature within this interval.

9. The device (**1**) for the storage and transport of biological material according to claim **8,** wherein the temperature range is comprised between 2°C and 6°C.

## Patentansprüche

1. Vorrichtung (**1**) zur Aufbewahrung und zum Transport von biologischem Material, einschließlich mindestens eines Organs, wobei die Vorrichtung (1) umfasst:
einen Behälter (3), der zur Aufnahme des Organs ausgelegt ist;
einen isothermen Behälter (**2**), der so konfiguriert ist, dass er im Gebrauch den Behälter (**3**) unterbringt, der zum Enthalten des Organs ausgelegt ist; und
ein Beutelsystem, umfassend:
- einen ersten Beutel (**S1**), der dazu ausgelegt ist, das in dem Behälter (**3**) unterzubringende Organ und eine Aufbewahrungsflüssigkeit zur Aufbewahrung des Organs zu enthalten; und
- einen zweiten Beutel (**S2**), der dazu ausgelegt ist, den ersten Beutel (**S1**) zu enthalten, enthaltend das mindestens eine Organ und die Aufbewahrungsflüssigkeit, und eine schwingungsdämpfende Flüssigkeit, um die Übertragung von Schwingungen auf das Organ während des Transports des Organs zu reduzieren,
wobei der erste und der zweite Beutel (**S1**, **S2**) in dem Behälter (**3**) untergebracht sind,
wobei das Beutelsystem ferner einen dritten Beutel (**S3**) umfasst, der dazu ausgelegt ist, den Behälter (**3**) zu enthalten, um dessen Sterilität während des Transports sicherzustellen,
und wobei die Vorrichtung (**1**) ferner eine Tasche (**6**) umfasst, die dazu ausgelegt ist, einen Temperatursensor (**7**) unterzubringen, der dazu ausgelegt ist, indikative Größen von Parametern zu erfassen, die sich auf die Bedingung des Organs in dem Behälter (**3**) beziehen, wobei sich die Tasche (**6**) innerhalb des ersten Beutels (**S1**) befindet oder darin integriert ist oder sich innerhalb des zweiten Beutels (**S2**) befindet.

2. Vorrichtung (**1**) zur Aufbewahrung und zum Transport von biologischem Material nach Anspruch 1, wobei der erste, der zweite und der dritte Beutel (**S1**) aus sterilem Material hergestellt sind und wobei der erste Beutel (**S1**) aus biokompatiblem und haltbarem Material hergestellt ist, um zu verhindern, dass sich der erste Beutel (**S1**) während des Transports des biologischen Materials bricht.

3. Vorrichtung (**1**) zur Aufbewahrung und zum Transport von biologischem Material nach Anspruch **1** und ferner umfassend:
- Computerverarbeitungs- und Speicherressourcen;
- ein Bedienerterminal (**29**), das abnehmbar an den isothermischen Behälter (**2**) koppelbar ist; und
eine elektronische Platte (**31**), die so angepasst ist, dass sie ein Sensorsystem (**33**) aufnimmt, das dazu ausgelegt ist, Größen zu erfassen, die für Parameter relativ zu den Transportbedingungen des biologischen Materials indikativ sind, und entsprechende Daten zu erzeugen, das Bedienerterminal (**29**) so ausgelegt ist, dass es eine Kurzstrecken-Konnektivität unterstützt, um mit dem Temperatursensor (**7**) und mit dem Sensorsystem (**33**) zu kommunizieren, um die Daten relativ zu den Größen, die für die Parameter relativ zum Transport des biologischen Materials indikativ sind, und die Daten relativ zu den die Größen, die für die Parameter relativ zu den Bedingungen des Organs in dem Behälter (**3**) indikativ sind, zu empfangen,
wobei das Bedienerterminal (**29**) auch so konfiguriert ist, dass es eine Langstrecken-Konnektivität unterstützt, die es dem Bedienerterminal (**29**) ermöglicht, mit den Computerverarbeitungs- und Speicherressourcen verbunden zu werden, um mit ihnen zu kommunizieren;
wobei die Vorrichtung (**1**) ferner eine Softwareanwendung umfasst, die auf dem Bedienerterminal (**29**) installierbar ist und die ausgelegt ist, sodass sie, wenn sie auf dem Bedienerterminal (**29**) ausgeführt wird, dazu ausgelegt ist:
- die Daten relativ zu den Größen, die für die Parameter relativ zum Transport des biologischen Materials indikativ sind, und die Daten relativ zu den Größen, die für die Parameter relativ zu den Bedingungen des Organs in dem Behälter (**3**) indikativ sind, empfangen und speichern;
- die Daten relativ zu den Größen, die für die Parameter relativ zum Transport des biologischen Materials indikativ sind, und die Daten relativ zu den Größen, die für Parameter relativ zu den Bedingungen des Organs in dem Behälter (**3**) indikativ sind, zu verarbeiten, um Informationen zu erzeugen, die für den Transport des biologischen Materials indikativ sind; und
- Benachrichtigungen an die Computerverarbeitungs- und -speicherressourcen zu erzeugen und zu übertragen, wobei die Computerressourcen dazu ausgelegt sind:
- die Daten relativ zu den Größen, die für die Parameter relativ zum Transport des biologischen Materials indikativ sind, und die Daten relativ zu den Größen, die für die Parameter relativ zu den Bedingungen des Organs in dem Behälter (**3**) von dem Bedienerterminal (**29**) indikativ sind, empfangen und speichern;
- am Ende des Transportvorgangs die Daten relativ zu den Größen, die für die Parameter relativ zum Transport des biologischen Materials indikativ sind, und die Daten relativ zu den Größen, die für Parameter relativ zu den Bedingungen des Organs in dem Behälter (**3**) indikativ sind, zu verarbeiten, um Berichte zu erstellen, die für den Transport des biologischen Materials indikativ sind; und
- Benachrichtigungen über die Verfügbarkeit der herunterzuladenden Berichte durch Zugriff auf die Computerverarbeitungs- und -speicherressourcen an mobile und/oder stationäre Benutzerterminals und/oder an das Bedienerterminal (**29**) zu erzeugen und zu übertragen,
und wobei die Computerverarbeitungs- und Speicherressourcen ferner dazu ausgelegt sind, um:
- Benachrichtigungen über alle außergewöhnlichen Ereignisse, die von dem Bedienerterminal (**29**) empfangen werden, zu empfangen und speichern; und
- Benachrichtigungen über alle außergewöhnlichen Ereignisse, die vom Bedienerterminal gemeldet wurden, zu erzeugen und sie an mobile und/oder stationäre Benutzerterminals (**29**) zu übertragen.

4. Vorrichtung (**1**) zur Aufbewahrung und zum Transport von biologischem Material nach Anspruch **3**, wobei das Sensorsystem (**33**) umfasst:
- einen Temperatursensor, der dazu ausgelegt ist, Größen relativ zur Temperatur der Umgebung außerhalb des isothermen Behälters (**2**) zu erfassen und entsprechende Daten zu erzeugen; und
- einen Spannungssensor, insbesondere einen dreiachsigen Beschleunigungsmesser, der dazu ausgelegt ist, Größen zu erfassen, die für die Bewegung der Vorrichtung (**1**) beim Bewegen indikativ sind, und entsprechende Daten zu erzeugen,
die Vorrichtung (**1**) ferner eine Softwareanwendung umfasst, die auf dem Bedienerterminal (**29**) installierbar ist und die so ausgelegt ist, sodass sie, wenn sie auf dem Bedienerterminal (**29**) ausgeführt wird, ausgelegt ist, um:
a) die vom Spannungssensor kommenden Daten zu empfangen und zu speichern;
b) die Werte, die den Daten zugeordnet sind, die von dem Spannungssensor kommen, mit einem Konfidenzintervall, zu vergleichen;
c) zu bestimmen, dass die Vorrichtung (1) einer Belastung ausgesetzt ist, die den Transport des Organs gefährden könnte, wenn die Werte, die den Daten zugeordnet sind, die von dem Spannungssensor kommen, über das Konfidenzintervall hinausgehen; und
d) eine Warnmeldung gemäß den Ergebnisdaten zu erzeugen, die an die externen mobilen und/oder stationären Benutzerterminals zu übertragen ist.

5. Vorrichtung (**1**) zur Aufbewahrung und zum Transport von biologischem Material nach einem der Ansprüche **3-4,** wobei der isotherme Behälter (2) umfasst:
- einen Hauptkörper (**22**) mit einem Fach (**23**), das angepasst ist, um den Behälter (**3**) zu empfangen und enthalten; und
- einen Deckel (**26**), der beweglich mit dem Hauptkörper (**22**) gekoppelt ist, um eine jeweilige erste und zweite Position einzunehmen, wobei der Deckel (**26**) dazu ausgelegt ist, das Fach (**23**) in der ersten Position von außen zugänglich zu machen und das Fach (**23**) in der zweiten Position von der Außenumgebung zu isolieren;
wobei das Bedienerterminal (**29**) ferner ein Global Positioning System (GPS) umfasst;
und wobei die elektronische Platte (**31**) ferner umfasst:
- eine Backup-Tracker-Vorrichtung (**34**), die dazu ausgelegt ist, die geografische Position der Vorrichtung (**1**) zu bestimmen; und
- eine Batterie (**35**), die mit dem Bedienerterminal (**29**) und dem Sensorsystem (**33**) verbunden ist und dazu ausgelegt ist, es bei Gebrauch mit Strom zu versorgen.

6. Vorrichtung (**1**) zur Aufbewahrung und zum Transport von biologischem Material nach einem der vorhergehenden Ansprüche, wobei der isotherme Behälter (**2**) ferner ein Probenaufnahmefach (**39**) umfasst, das mit Schlitzen (**40**) versehen ist, die dazu ausgelegt sind, zu transportierende biologische Proben aufzunehmen, wobei das Probenaufnahmefach (**39**) mit einer Schicht aus isolierendem Material versehen ist, die es ermöglicht, die biologischen Proben innerhalb der Schlitzen (**40**) zu halten, sie thermisch zu isolieren und die Auswirkungen von Stößen auf sie zu reduzieren.

7. Vorrichtung (**1**) zur Aufbewahrung und zum Transport von biologischem Material nach einem der vorhergehenden Ansprüche, wobei der isotherme Behälter (**2**) ferner eine Wärmekonditionierungsplatte (**41**) umfasst, die in einem Schlitz (**42**) untergebracht werden kann, der in dem Hauptkörper **(22)** ausgebildet ist und angepasst ist, um die Platte **(41)** aufzunehmen und zumindest deren teilweise Entnahme zu ermöglichen;
die Wärmekonditionierungsplatte **(41)** so ausgelegt ist, dass die Temperatur für die Aufbewahrung des biologischen Materials aufrechterhalten werden kann.

8. Vorrichtung **(1)** zur Aufbewahrung und zum Transport von biologischem Material nach Anspruch **7,** wobei die Wärmekonditionierungsplatte aus einem Phasenwechselmaterial hergestellt ist, so dass sie, wenn sie Wärme aufnimmt oder abgibt, ihren Zustand ändert, um die Temperatur in dem Fach **(23)** auf ein Temperaturintervall zu bringen und die Temperatur innerhalb dieses Intervalls zu halten.

9. Vorrichtung (1) zur Aufbewahrung und zum Transport von biologischem Material nach Anspruch **8,** wobei der Temperaturbereich zwischen 2 °C und 6 °C liegt.

## Revendications

1. Dispositif **(1)** pour le stockage et le transport de matériel biologique incluant au moins un organe, le dispositif (1) comprenant :
un conteneur (3) destiné à contenir l'organe ;
un conteneur isotherme **(2)** configuré pour loger en cours d'utilisation le conteneur **(3)** destiné à contenir l'organe ; et
un système de sacs comprenant :
- un premier sac **(S1)** conçu pour contenir l'organe à loger dans le conteneur **(3)** et un liquide de stockage pour stocker l'organe ; et
- un deuxième sac **(S2)** conçu pour contenir le premier sac **(S1),** contenant au moins un organe et le liquide de stockage, et un liquide amortisseur de vibrations pour réduire la transmission des vibrations sur l'organe pendant le transport de l'organe,
dans lequel le premier et le deuxième sac **(S1, S2)** sont logés dans le conteneur **(3),**
dans lequel le système de sacs comprend en outre un troisième sac **(S3)** conçu pour contenir le conteneur **(3)** afin d'en assurer la stérilité pendant le transport,
et dans lequel le dispositif **(1)** comprend en outre une poche **(6)** conçue pour loger un capteur de température **(7)** conçu pour détecter des quantités indicatives de paramètres relatifs à l'état de l'organe dans le conteneur **(3),** la poche **(6)** étant à l'intérieur du premier sac **(S1)** ou intégrée à celui-ci ou étant à l'intérieur du deuxième sac **(S2).**

2. Dispositif **(1)** de stockage et de transport de matériel biologique selon la revendication **1,** dans lequel le premier, le deuxième et le troisième sac **(S1)** sont fabriqués en matériau stérile et dans lequel le premier sac **(S1)** est fabriqué en matériau biocompatible et durable pour empêcher le premier sac **(S1)** de se briser pendant le transport du matériel biologique.

3. Dispositif **(1)** pour le stockage et le transport de matériel biologique selon la revendication **1** et comprenant en outre :
- des ressources informatiques de traitement et de stockage ;
- un terminal d'opérateur **(29)** pouvant être couplé de manière amovible au conteneur isotherme **(2) ;** et
un panneau électronique **(31)** adapté pour abriter un système de capteurs **(33)** conçu pour détecter des quantités indicatives de paramètres relatifs aux conditions de transport du matériel biologique et générer des données correspondantes, le terminal d'opérateur **(29)** est conçu pour supporter la connectivité à courte portée afin de communiquer avec le capteur de température **(7)** et avec le système de capteurs **(33)** pour recevoir les données relatives aux quantités indicatives des paramètres relatifs au transport du matériel biologique et les données relatives aux quantités indicatives des paramètres relatifs aux conditions de l'organe dans le conteneur **(3),**
le terminal d'opérateur **(29)** est également configuré pour supporter une connectivité à longue portée qui permet au terminal d'opérateur **(29)** d'être connecté aux ressources informatiques de traitement et de stockage pour communiquer avec elles ;
dans lequel le dispositif **(1)** comprend en outre une application logicielle, installable sur le terminal d'opérateur **(29),** qui est conçue de telle sorte que, lorsqu'elle est exécutée sur le terminal d'opérateur **(29),** elle est conçue pour :
- recevoir et stocker les données relatives aux quantités indicatives des paramètres relatifs au transport du matériel biologique et les données relatives aux quantités indicatives des paramètres relatifs aux conditions de l'organe dans le conteneur **(3)** ;
- traiter les données relatives aux quantités indicatives des paramètres relatifs au transport du matériel biologique et les données relatives aux quantités indicatives des paramètres relatifs aux conditions de l'organe dans le conteneur **(3)** pour générer des informations indicatives du transport du matériel biologique ; et
- générer et transmettre des notifications aux ressources informatiques de traitement et de stockage, les ressources informatiques étant conçues pour :
- recevoir et stocker les données relatives aux quantités indicatives des paramètres relatifs au transport du matériel biologique et les données relatives aux quantités indicatives des paramètres relatifs à l'état de l'organe dans le conteneur **(3)** à partir du terminal d'opérateur **(29)** ;
- à la fin de la procédure de transport, traiter les données relatives aux quantités indicatives des paramètres relatifs au transport du matériel biologique et les données relatives aux quantités indicatives des paramètres relatifs aux conditions de l'organe dans le conteneur **(3)** pour générer des rapports indicatifs du transport du matériel biologique ; et
- générer et transmettre des notifications aux terminaux d'utilisateurs mobiles et/ou stationnaires et/ou au terminal d'opérateur **(29)** concernant la disponibilité des rapports à télécharger en accédant aux ressources informatiques de traitement et de stockage,
et dans lequel les ressources informatiques de traitement et de stockage sont en outre conçues pour
- recevoir et stocker les notifications relatives à tout événement extraordinaire reçues du terminal d'opérateur **(29)** ; et
- générer et transmettre des notifications aux terminaux d'utilisateurs mobiles et/ou stationnaires concernant tout événement extraordinaire notifié par le terminal d'opérateur **(29).**

4. Dispositif **(1)** pour le stockage et le transport de matériel biologique selon la revendication **3,** dans lequel le système de capteurs **(33)** comprend :
- un capteur de température conçu pour détecter des quantités relatives à la température de l'environnement à l'extérieur du conteneur isotherme **(2)** et générer les données correspondantes ; et
- un capteur de contrainte, en particulier un accéléromètre triaxial, conçu pour détecter des quantités indicatives du déplacement du dispositif **(1)** lorsqu'il est déplacé et pour générer les données correspondantes,
le dispositif **(1)** comprend en outre une application logicielle, installable sur le terminal d'opérateur **(29),** qui est conçue pour, lorsqu'elle est exécutée sur le terminal d'opérateur **(29)** :
a) recevoir et stocker les données provenant du capteur de contrainte ;
b) comparer les valeurs associées aux données provenant du capteur de contrainte avec un intervalle de confiance ;
c) déterminer que, si les valeurs associées aux données provenant du capteur de contrainte sont supérieures à l'intervalle de confiance, le dispositif **(1)** est soumis à un contrainte qui pourrait compromettre le transport de l'organe ; et
d) générer une notification d'alerte, en fonction des données de résultat, à transmettre aux terminaux d'utilisateurs externes mobiles et/ou stationnaires.

5. Dispositif **(1)** pour le stockage et le transport de matériel biologique selon l'une quelconque des revendications **3-4,** dans lequel le conteneur isotherme (2) comprend :
- un corps principal **(22)** ayant un compartiment **(23)** adapté pour recevoir et contenir le conteneur **(3)** ; et
- un couvercle **(26)** couplé de manière mobile au corps principal **(22)** de façon à prendre une première et une deuxième position respectives, le couvercle **(26)** étant conçu pour rendre le compartiment **(23)** accessible de l'extérieur dans la première position et pour isoler le compartiment **(23)** de l'environnement extérieur dans la deuxième position ;
dans lequel le terminal d'opérateur **(29)** comprend en outre un système de positionnement global (GPS) ;
et dans lequel le panneau électronique **(31)** comprend en outre :
- un dispositif de suivi de sauvegarde **(34)** conçu pour déterminer la position géographique du dispositif **(1)** ; et
- une batterie **(35)** connectée au terminal d'opérateur **(29)** et au système de capteurs **(33)** conçue pour l'alimenter lorsqu'il est utilisé.

6. Dispositif **(1)** de stockage et de transport de matériel biologique selon l'une quelconque des revendications précédentes, dans lequel le conteneur isotherme **(2)** comprend en outre un compartiment porte-échantillons **(39)** pourvu de fentes **(40)** destinées à loger les échantillons biologiques à transporter, le compartiment porte-échantillons **(39)** étant pourvu d'une couche de matériau isolant qui permet de maintenir les échantillons biologiques à l'intérieur des fentes **(40),** de les isoler thermiquement et de réduire l'impact des chocs éventuels sur eux.

7. Dispositif **(1)** de stockage et de transport de matériel biologique selon l'une quelconque des revendications précédentes, dans lequel le conteneur isotherme **(2)** comprend en outre un panneau de conditionnement thermique **(41)** qui peut être logé dans une fente **(42)** formée dans le corps principal **(22)** et adaptée pour recevoir le panneau **(41)** et permettre au moins l'extraction partielle de celui-ci ;
le panneau de conditionnement thermique **(41)** est conçu pour permettre le maintien de la température de stockage du matériel biologique.

8. Dispositif **(1)** de stockage et de transport de matériel biologique selon la revendication **7,** dans lequel le panneau de conditionnement thermique est constitué d'un matériau à changement de phase tel que, lorsqu'il absorbe ou libère de la chaleur, il change d'état, de manière à amener la température dans le compartiment **(23)** à un intervalle de température et à maintenir la température à l'intérieur de cet intervalle.

9. Dispositif **(1)** pour le stockage et le transport de matériel biologique selon la revendication **8,** dans lequel la plage de température est comprise entre 2 °C et 6 °C.
